# FASCICULE DE BREVET EUROPEEN

(11) **EP 0 870 947 B1**
(45) Date de publication et mention de la délivrance du brevet: **09.07.2003**
(21) Numéro de dépôt: 98400778.1
(22) Date de dépôt: 02.04.1998
(51) Int. Cl.: F16F 9/04

(54) **Coussin d'air pour suspension de véhicules**
Luftpolster für Kraftfahrzeugaufhängung
Air cushion for vehicle suspension

(30) Priorité: 07.04.1997 FR 9704195
(43) Date de publication de la demande: 14.10.1998
(73) Titulaire: Dunlop Airsprings, 92130 Issy les Moulineaux (FR)
(72) Inventeur: Descout, Guy, 03410 Saint Victor (FR)
(74) Mandataire: Le Bras, Hervé

(56) Documents cités:
- EP-A- 0 207 877
- EP-A- 0 306 040
- EP-A- 0 451 749
- DE-A- 4 423 602
- DE-U- 9 203 929
- FR-A- 2 206 458
- US-A- 2 749 943
- US-A- 3 130 965

## Description

L'invention concerne le domaine des coussins d'air pour suspension de véhicules.

Un coussin d'air pour suspension est normalement constitué de trois parties essentielles : une membrane flexible, une plaque supérieure avec une entrée d'air et un piston sur lequel la membrane s'enroule.

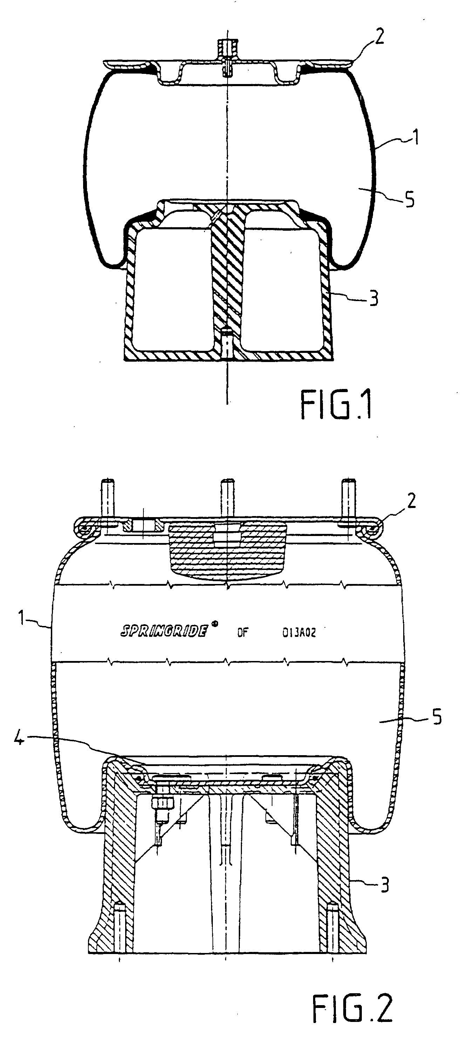

La figure 1 montre un type de coussin d'air utilisé dans de nombreuses applications (autobus, autocars, tracteurs routiers), dans lequel la membrane 1, en fonctionnement, est solidaire de la plaque 2 et du piston 3 sous le seul effet de la pression régnant dans l'enceinte 5. Les trois parties sont en fait indépendantes et le coussin peut être démonté.

Dans d'autres applications (semi-remorques, camions), qui exigent parfois de grandes courses, le maintien en place de la membrane 1, sous l'effet de la pression, n'est plus suffisante. Il faut alors utiliser des méthodes de fixation mécanique de la membrane sur la plaque et le piston. Généralement, ainsi que cela est montré à la figure 2, la plaque supérieure 2 est sertie, parfois agrafée, sur le pourtour de l'ouverture supérieure de la membrane 1. Le piston 3 est maintenu sur l'extrémité inférieure de la membrane 1 par pincement de cette extrémité au moyen d'une coupelle 4 vissée sur le piston 3. Dans d'autres configurations la membrane 1 est également agrafée sur le piston. Le montage de la membrane sur la plaque et le piston nécessite un outillage spécial et demande beaucoup de temps.

EP-A-451 749 décrit un ressort à coussin d'air pour la suspension d'un véhicule de chemin de fer qui comporte une membrane présentant des renforcements annulaires à chacune de ses extrémités et dont la surface externe du renforcement annulaire inférieur est fixée par vulcanisation sur la paroi conique d'un anneau monté sur la bogie. Le but de cette vulcanisation est d'augmenter la durée de vie de la membrane qui est soumise à des efforts de torsion dans cette zone par suite des mouvements horizontaux relatifs entre le châssis du véhicule et le bogie dans les virages.

Le but de la présente invention est de proposer un coussin d'air facile à réaliser pour suspension de véhicules dans lequel l'étanchéité de l'enceinte soit garantie, en toutes circonstances.

L'invention concerne donc un coussin d'air conforme au préambule de la revendication 1.

Ce coussin d'air est caractérisé par le fait que l'un au moins des composants d'extrémité présente une coupelle qui s'étend à l'intérieur de l'extrémité correspondante de la membrane et cette dernière adhère sur la surface périphérique de ladite coupelle.

Avantageusement, une bague entoure ladite extrémité de membrane et cette bague est, également, solidaire à la membrane durant le processus de vulcanisation.

Grâce à cette disposition, après le processus de vulcanisation, le coussin d'air se présente sous la forme d'une pièce monobloc prête au montage sur le véhicule.

Cette nouvelle technologie s'applique avantageusement à des coussins d'air de suspension de voiture ou de petits véhicules utilitaires.

Le produit peut également convenir aux suspensions d'autres véhicules routiers, de cabine et de siège ou être utilisé comme vérin souple pour des applications industrielles.

D'autres avantages et caractéristiques de l'invention ressortiront à la lecture de la description suivante faite à titre d'exemple, non-limitatif, et en référence aux dessins annexés dans lesquels :
la figure 1 montre un premier type de coussin d'air de l'art antérieur dans lequel la membrane est solidaire des composants d'extrémité sous le seul effet de la pression ;
la figure 2 montre un deuxième type de coussin d'air de l'art antérieur dans lequel la membrane est fixée sur les composants d'extrémité par sertissage et vissage d'une coupelle sur un piston ;
la figure 3 montre un coussin d'air selon la présente invention tel qu'il se trouve à la sortie du moule de vulcanisation ;
la figure 4 montre le coussin d'air de la figure 3 en fonctionnement ;
la figure 5 est une coupe de la membrane.

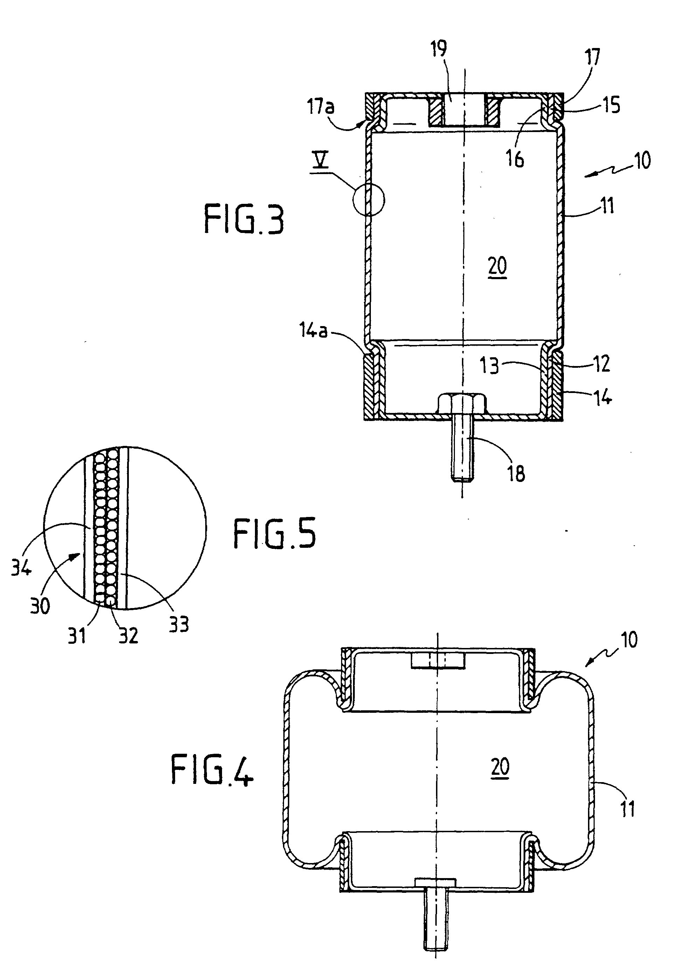

La figure 3 montre un coussin d'air 10 qui comporte essentiellement une membrane flexible annulaire 11 de forme globalement cylindrique, dont l'extrémité inférieure 12 est disposée entre une coupelle 13 et une bague 14, et dont l'extrémité supérieure 15 est disposée entre une coupelle 16 et une bague 17. La membrane 11 a une épaisseur sensiblement homogène sur toute son étendue.

La coupelle inférieure 13 est équipée d'une vis de fixation 18, tandis que la coupelle supérieure 16 est munie d'une entrée d'air 19 et de moyens de fixation sur un châssis de véhicule. La vis de fixation 18 permet le montage du coussin d'air sur un élément de suspension du véhicule, un essieu par exemple.

Lorsque l'enceinte interne 20 du coussin d'air 1 est remplie avec un gaz sous pression, de l'air par exemple, ainsi que cela est montré sur la figure 4, la membrane 11 se présente sous la forme d'une baudruche dont les extrémités s'enroulent sur les parois externes des bagues 14 et 17. A cet effet, les bords en vis-à-vis (14a, 17a) de ces deux bagues 14, 17 sont de forme arrondie pour éviter de blesser la membrane 11 en fonctionnement.

Les extrémités 12 et 15 de la membrane 11 sont solidarisées aux coupelles 13, 16 et aux bagues 14 et 17, durant le processus de vulcanisation de la membrane 11.

La membrane flexible 11 est obtenue par vulcanisation d'une ébauche cylindrique 30, composée de deux nappes croisées 31, 32 de fils parallèles enrobés de caoutchouc, d'une couche intérieure 33 et d'une couche extérieure 34 de caoutchouc.

Avant la vulcanisation, les extrémités de l'ébauche sont insérées respectivement entre la coupelle 13 et la bague 14 et la coupelle 16 et la bague 17, l'ensemble étant ensuite disposé dans un moule de vulcanisation.

Les coupelles 13, 16 sont de préférence métalliques et leurs surfaces, après nettoyage, sont préalablement traitées par un produit adéquat, afin d'améliorer l'adhérence durant l'opération de vulcanisation.

Le caoutchouc de l'ébauche est un mélange à base d'élastomère chargé en noir de carbone.

Les adhérences coupelles-membrane et bagues-membrane obtenues lors de la vulcanisation permettent un fonctionnement adéquat du coussin d'air et garantissent l'étanchéité et la résistance du coussin. Un tel coussin peut admettre sans défaillance une pression de 30bars.

## Revendications

1. Coussin d'air pour suspension de véhicules comportant une membrane flexible, en caoutchouc renforcé (11), annulaire dont les extrémités (12, 15) sont fixées sur des composants d'extrémité, à savoir une plaque et un piston, la membrane flexible (11) ayant une épaisseur sensiblement homogène sur toute son étendue et étant rendue solidaire desdits composants grâce à une adhérence chimique obtenue durant le processus de vulcanisation, **caractérisé par le fait que** l'un au moins des composants d'extrémité comporte une coupelle (13, 16) qui s'étend à l'intérieur de l'extrémité correspondante (12, 15) de la membrane (11) et cette dernière adhère sur la surface périphérique de ladite coupelle (13, 16).

2. Coussin d'air selon la revendication 1, **caractérisé par le fait qu'**une bague (14, 17) entoure ladite extrémité (12, 15) de membrane et cette bague est, également, solidarisée à la membrane durant le processus de vulcanisation.

## Patentansprüche

1. Luftkissen zur Federung von Fahrzeugen, umfassend eine nachgiebige ringförmige Membran aus verstärktem Gummi (11), deren Enden (12, 15) an Endbauteilen, nämlich einer Platte und einem Kolben, angebracht sind wobei die nachgiebige Membran eine im Wesentlichen gleichmäßige Dicke über ihre ganze Erstreckung aufweist und mit den Bauteilen durch eine chemische Anhaftung verbunden ist, die während des Vulkanisationsprozesses erhalten wird, **dadurch gekennzeichnet, dass** wenigstens eines der Endbauteile eine Schale (13, 16) umfasst, die sich im Innenraum des zugeordneten Endes der Membran erstreckt und letztere an der Außenoberfläche der Schale (13, 16) anhaftet.

2. Luftkissen nach Anspruch 1, **dadurch gekennzeichnet, dass** ein Ring (14, 17) das Ende (12, 15) der Membran umgibt und dieser Ring auch mit der Membran während des Vulkanisationsprozesses verbunden wird.

## Claims

1. Vehicle suspension air cushion including an annular, reinforced-rubber flexible membrane (11), the ends (12, 15) of which are fixed on end components, namely a plate and a piston, the flexible membrane (11) having a substantially homogeneous thickness over its entire extent and being secured to said components by virtue of a chemical adhesion obtained during the vulcanization process, **characterized in that** at least one of the end components includes a dish (13, 16) that extends inside the relevant end (12, 15) of the membrane (11), and the latter adheres to the peripheral surface of said dish (13, 16).

2. Air cushion according to Claim 1, **characterized in that** a ring (14, 17) surrounds said membrane end (12, 15), and this ring is also secured to the membrane during the vulcanization process.
